(19) Europäisches Patentamt
European Patent Office
Office européen des brevets

(11) **EP 2 841 769 B1**

(12) **FASCICULE DE BREVET EUROPEEN**

(45) Date de publication et mention de la délivrance du brevet:
**30.03.2016 Bulletin 2016/13**

(21) Numéro de dépôt: **13720466.5**

(22) Date de dépôt: **10.04.2013**

(51) Int Cl.:
*F03D 13/20* (2016.01)      *F03D 7/02* (2006.01)
*F03D 1/00* (2006.01)

(86) Numéro de dépôt international:
**PCT/FR2013/050776**

(87) Numéro de publication internationale:
**WO 2013/160579 (31.10.2013 Gazette 2013/44)**

(54) **ÉOLIENNE SUR SUPPORT FLOTTANT STABILISÉE PAR UN SYSTÈME D'ANCRAGE SURÉLEVÉ**

WINDTURBINE AUF EINEM DURCH EIN ERHÖHTES VERANKERUNGSSYSTEM STABILISIERTEN SCHWIMMENDEN TRÄGER

WIND TURBINE ON A FLOATING SUPPORT STABILISED BY A RAISED ANCHORING SYSTEM

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **27.04.2012 FR 1201253**

(43) Date de publication de la demande:
**04.03.2015 Bulletin 2015/10**

(73) Titulaire: **IFP Énergies nouvelles**
**92852 Rueil-Malmaison Cedex (FR)**

(72) Inventeurs:
• **AVERBUCH, Daniel**
  **F-69390 Vernaison (FR)**
• **POIRETTE, Yann**
  **F-38121 Reventin-Vaugris (FR)**
• **PERDRIZET, Timothee**
  **F-69007 Lyon (FR)**

(56) Documents cités:
WO-A2-2011/083021      DE-A1-102008 029 982
DE-A1-102009 057 794

**Description**

L'objet de cette invention concerne les éoliennes installées en mer sur un support flottant et plus particulièrement les systèmes de stabilisation du support flottant aux efforts générés par le vent sur l'aérogénérateur.

Dans le cas d'une éolienne standard de puissance 5MW, la nacelle peut porter un rotor constitué de trois pales (par exemple de longueur environ 60 m) qui entraine par l'intermédiaire d'un réducteur de vitesse la partie tournante d'une génératrice électrique et des accessoires tels que le système d'orientation des pales, des transformateurs électriques, un système hydraulique, un système de ventilation. La structure de la nacelle repose sur une couronne d'orientation supportée par le mat.

Le plan du rotor est orienté face au vent. Pour cela la nacelle est mobile en rotation par rapport à l'axe du mat, par l'entrainement d'un (ou de plusieurs) engrenages motorisés, coopérant avec une couronne dentée. L'ensemble d'une nacelle peut peser de l'ordre de 200 à 300 tonnes.

Le mat, de hauteur environ 100 m, supportant la nacelle repose sur un support flottant maintenu par des lignes d'ancrage, dans le cas de profondeurs d'eau supérieures 50 m.

Les éoliennes flottantes comprennent des systèmes de supports flottants et d'ancrage de diverses natures, systèmes dont une des fonctions est de limiter les mouvements et accélérations au niveau de la turbine, sous l'effet de l'environnement marin (vent, courant, houle). Cependant, la problématique particulière des éoliennes flottantes est qu'un moment de renversement important est créé par la force de poussée du rotor en fonctionnement, qui s'applique approximativement au niveau de la nacelle. Lorsque l'éolienne est à l'arrêt, la force de poussée est réduite et son point d'application décalé vers le bas.

En effet, le rotor de l'éolienne est soumis à de nombreuses forces et contraintes liée à la vitesse du vent. Cela se traduit par une poussée sur le rotor supportée par une butée tournante. Cette force de poussée orientée suivant la direction du vent, a une valeur qui est dépendante de l'angle des pales (pas ou "pitch") par rapport à la direction du vent.

Un des paramètres importants pour le dimensionnement d'une éolienne flottante est l'inclinaison du flotteur (donc du rotor), les éoliennes ne pouvant fonctionner au delà d'inclinaisons relativement modérées (typiquement quelques degrés).

Il est donc nécessaire de concevoir un flotteur et son système d'ancrage, de manière à en limiter la gîte et l'assiette et *a fortiori* les mouvements de tangage et de roulis.

On connaît des supports flottants de tout type (semi-submersible, spar, ou TLP), dimensionnés pour limiter le tangage et le roulis sous l'effet notamment du couple de renversement créé par l'éolienne. Ces flotteurs reposent respectivement sur la création d'un moment de réaction sous l'action des efforts hydrostatiques, de poids ou de la tension des ancrages. Ainsi, dans les systèmes éoliens de l'art antérieur, le flotteur fournit la raideur hydrostatique nécessaire à limiter l'inclinaison sous l'effet des chargements.

Le document DE102008029982 montre un système typique de l'état de la technique.

Cependant, le fait de jouer sur les dimensions des flotteurs, peut engendrer, selon les conditions d'utilisation, des surdimensionnements, voire des sous dimensionnements lors de conditions exceptionnelles (forts vents, ...).

L'objet de la présente invention consiste à proposer une disposition particulière des moyens d'ancrage, de façon à limiter la gîte et l'assiette ainsi que les mouvements de tangage et de roulis sous l'effet notamment du couple de renversement créé par l'éolienne pour un support flottant donné.

De façon générale, la présente invention concerne un système éolien comprenant une éolienne reposant sur un support flottant, et des moyens d'ancrage du système connecté audit système par des points de fixation. Le système comporte en plus des moyens de surélévation desdits points de fixation au dessus d'une ligne de flottaison dudit support flottant, les moyens de surélévation surélevant les points de fixation à une hauteur par rapport à la ligne de flottaison déterminée pour contrebalancer le moment de renversement de l'éolienne soumise à un vent de vitesse donné.

Selon l'invention, les points de fixation peuvent être au dessus du franc bord du support flottant.

Selon un mode de réalisation, les moyens de surélévation comportent des poutres, ou des poutres et des câbles. Les poutres peuvent être des supports métalliques tubulaires, ou des supports métalliques de section variable, ou réalisées en treillis.

Selon un mode de réalisation, les moyens de surélévation sont connectés mécaniquement au mat de l'éolienne.

Selon un autre mode de réalisation, les moyens de surélévation sont connectés mécaniquement entre eux par des poutres ou des câbles, pour raidir à la flexion lesdits moyens de surélévation.

Selon l'invention, les moyens de surélévation peuvent être constitués d'une extension des colonnes du flotteur.

Enfin, les points de fixation peuvent être situés à des hauteurs différentes.

L'invention sera mieux comprise et ses avantages apparaîtront plus clairement à la lecture des exemples ci-après, nullement limitatifs, et illustrés par les figures ci-après annexées, parmi lesquelles :

- la figure 1 montre schématiquement un exemple de système éolien selon l'invention.
- la figure 2 illustre le principe de l'invention en montrant les forces et le moment de renversement de l'éolienne.

- la figure 3 illustre des moyens de surélévation comportant des poutres (PO), ou des poutres et des câbles.
- la figure 4 illustre des moyens de surélévation connectés au mat de l'éolienne par des moyens mécaniques (CO), tels que des poutres ou des câbles.
- la figure 5 illustre des moyens de surélévation connectés mécaniquement entre eux par des poutres ou des câbles (LP), pour raidir à la flexion les moyens de surélévation.
- la figure 6 illustre des moyens de surélévation constitués d'une extension des colonnes du flotteur, sous forme de treillis par exemple.
- la figure 7 illustre des moyens de surélévation constitués de système mécaniques fixés au mat, pour connecter directement les moyens d'ancrage au mat et non au support flottant.
- la figure 8 illustre un mode de réalisation où le système comporte des points de fixations des moyens d'ancrage à des hauteurs différentes.
- la figure 9 montre l'impact de la hauteur (H) du point de fixation sur la gîte (PS) pour trois masses linéiques différentes.

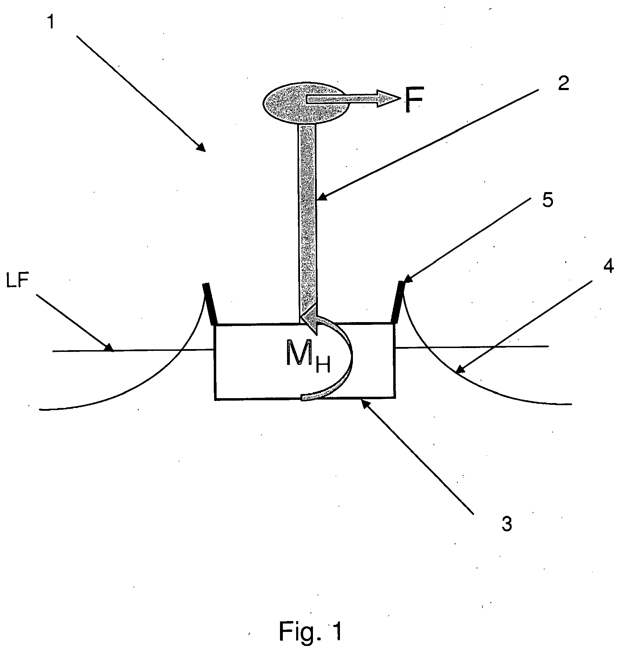

La figure 1 illustre un exemple de système éolien (1) installé en mer, selon l'invention. Un tel système comporte une éolienne (2), un support flottant (3) sur lequel repose l'éolienne, et des moyens d'ancrage (4) du système. Les moyens d'ancrage sont connectés au système par des points de fixation, classiquement au niveau du support flottant.

Pour lutter contre le moment de renversement de l'éolienne ($M_H$) créé par l'action (effort horizontal F) d'un vent de vitesse V sur l'éolienne, sans pour autant augmenter la taille (B) du support flottant, on ajoute à ce système des moyens de surélévation (5) des points de fixation au dessus de la ligne de flottaison (LF) du flotteur. Les points de fixation sont alors connectés à une hauteur H de la ligne de flottaison, cette hauteur étant déterminée de façon à ce que les moyens d'ancrage contrebalancent le plus efficacement possible le moment de renversement de l'éolienne pour une vitesse de vent V donné.

On connaît de nombreux types de support flottant (semi-submersible, « spar », ou TLP), et de nombreux type de moyens d'ancrage (caténaires, semi-caténaires ou tendus).

Classiquement un moyen d'ancrage comporte :

- un système de tensionnement, classiquement au niveau du flotteur, pour tendre la ligne.
- la ligne d'ancrage qui peut d'être constitué d'un ou plusieurs tronçons de chaine et/ou de câble
- un chaumard fixé au support flottant sous la ligne de flottaison qui guide la ligne le long de la coque jusqu'au système de tensionnement. C'est le point de fixation du moyen d'ancrage sur le support flottant.

- un moyen de fixation de la ligne d'ancrage au lit marin (ancre, pieux, ...)

Principe de l'invention

L'objectif est de limiter l'inclinaison du support flottant sous l'effet du moment de renversement créé par l'action du vent sur l'éolienne.

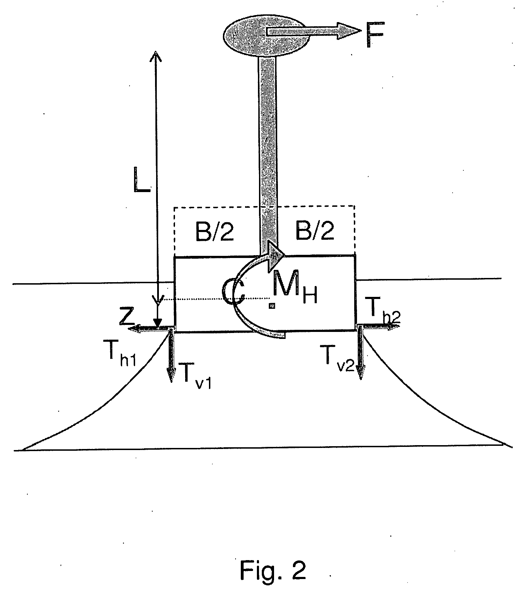

L'invention est décrite dans le cas d'un support flottant de longueur B, dans un plan ancré par deux ancrages et soumis à un effort horizontal d'intensité F, fonction de la vitesse V du vent, appliqué sur la nacelle (voir figure 2). Cet effort représente la poussée du rotor sous l'action d'un vent de vitesse V.

Le flotteur est donc soumis à son poids P appliqué en son centre de gravité, à la poussée d'Archimède A appliquée au centre de carène C (centre de gravité de la masse d'eau déplacée); aux efforts externes et aux efforts de réaction des ancrages. La position relative de C et P crée lors des mouvements du flotteur un couple hydrostatique qui équilibre le moment de renversement lié à l'action des efforts extérieurs au flotteur.

Notons L la distance verticale entre le point d'application de la force F et le centre de carène, et z la distance verticale entre le point de fixation des ancrages au flotteur et le centre de carène. z est positif si le point de fixation est au dessus du centre de carène et négatif s'il est en dessous. Sur la figure 2, les points de fixation des ancrages sont situés sous la ligne de flottaison.

Analysons maintenant l'équilibre du flotteur ancré. Le moment de renversement $M_h$ peut s'écrire :

$$M_h = F*(L-z)+(T_{v2}-T_{v1})*B/2$$

Avec:

$M_h$   : moment de renversement
F     : intensité de l'effort horizontal
L     : distance verticale entre le point d'application de la force F et le centre de carène
z     : hauteur du point de fixation au centre de carène
$Tv_2$   : composante verticale de la tension T sur une ligne d'ancrage 2.
$T_{v1}$   : composante verticale de la tension T sur une ligne d'ancrage 1.
B     : longueur du support flottant

Pour réduire le moment de renversement, il faut réduire la distance L-z.
Ainsi, selon l'invention, on utilise des moyens de surélévation des points de fixation au dessus de la ligne de flottaison du flotteur, augmentant ainsi la hauteur z. De préférence, les moyens de surélévation permettent de positionner les points de fixation au dessus du franc-bord du support flottant. On appelle franc-bord la distance entre le niveau de l'eau (ligne de flottaison) et la partie supérieure du support flottant.

Ces moyens de surélévation sont dimensionnés de façon à surélever les points de fixation à une hauteur par rapport à la ligne de flottaison déterminée pour contrebalancer le moment de renversement de l'éolienne soumise à un vent de vitesse donné.

Moyens de surélévation

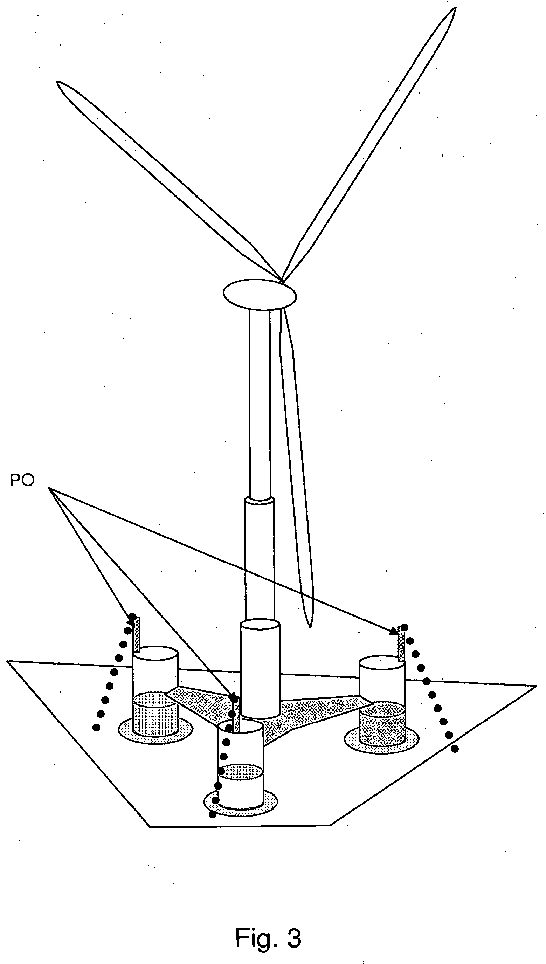

Selon un mode de réalisation représenté sur la figure 3, les moyens de surélévation comportent des poutres (PO), ou des poutres et des câbles. Les poutres peuvent être des supports métalliques tubulaires, ou des supports métalliques de section variable, ou réalisées en treillis.

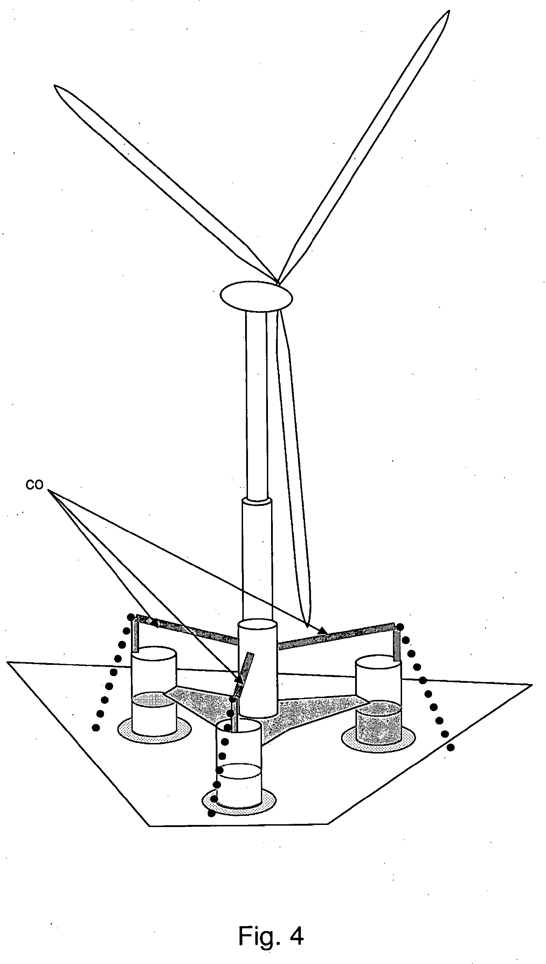

Selon un mode de réalisation représenté sur la figure 4, les moyens de surélévation sont connectés au mat de l'éolienne par des moyens mécaniques (CO), tels que des poutres ou des câbles.

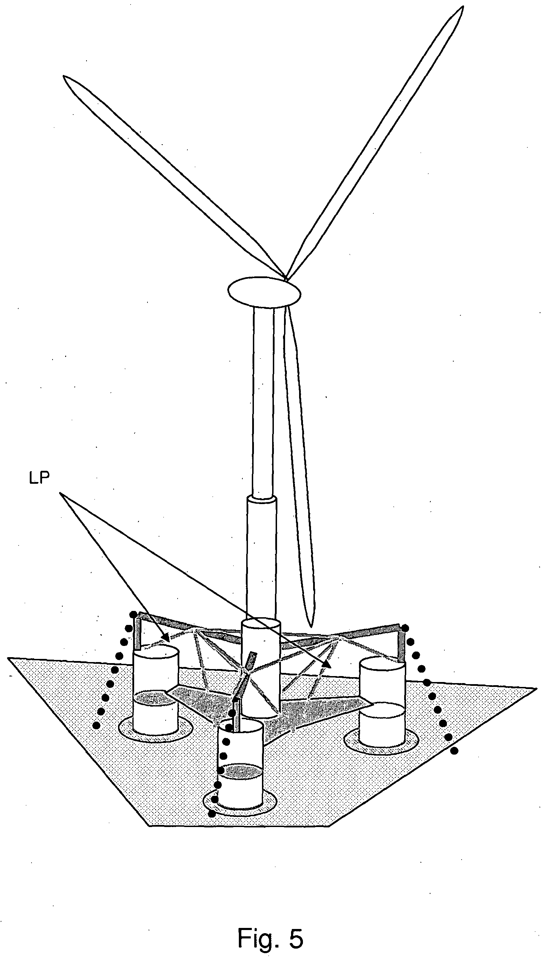

Selon un mode de réalisation représenté sur la figure 5, les moyens de surélévation sont connectés mécaniquement entre eux par des poutres ou des câbles (LP), pour raidir à la flexion les moyens de surélévation.

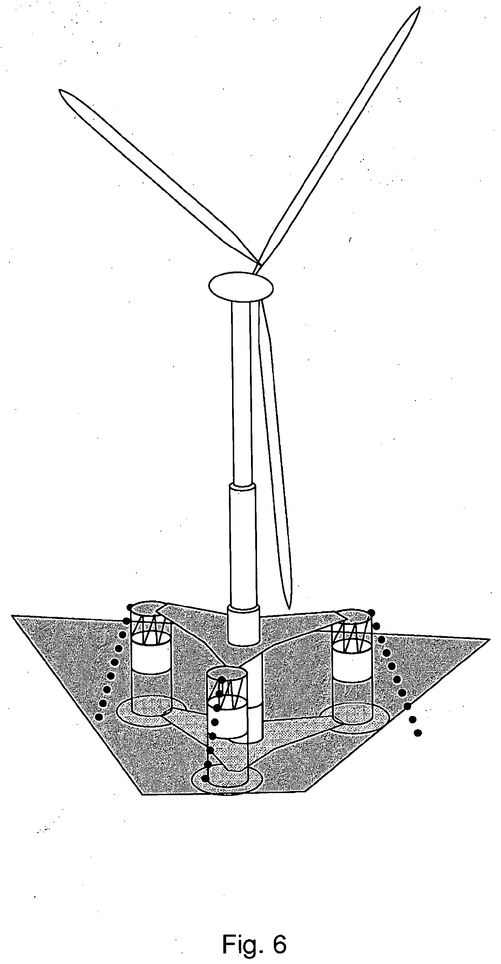

Selon un mode de réalisation représenté sur la figure 6, les moyens de surélévation sont constitués d'une extension des colonnes du flotteur, sous forme de treillis par exemple.

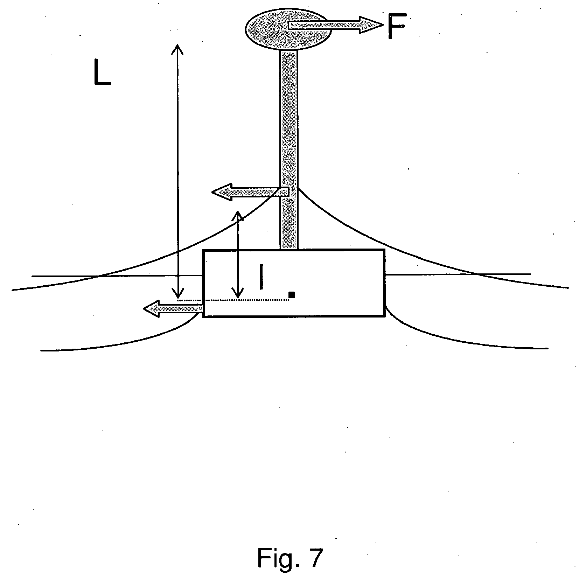

Selon un mode de réalisation représenté sur la figure 7, les moyens de surélévation sont constitués de systèmes mécaniques permettant de connecter directement les moyens d'ancrage au mat et non au support flottant.

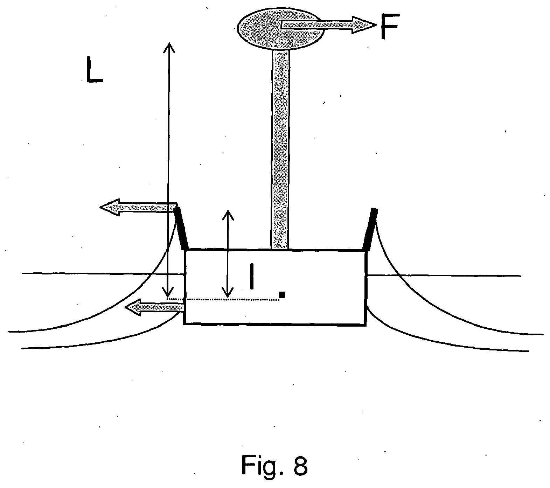

Selon un mode de réalisation représenté sur la figure 8, le système comporte des points de fixations des moyens d'ancrage à des hauteurs différentes. Par exemple, le système peut comporter des points de fixation au niveau des moyens de surélévation, et des points de fixation sous la ligne de flottaison.

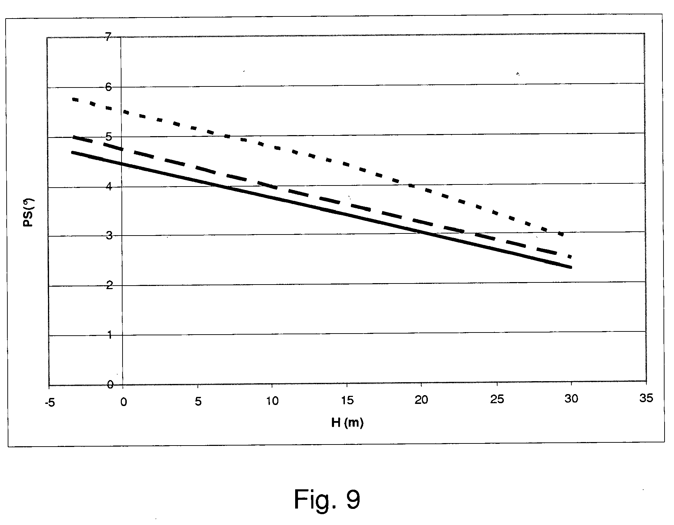

La figure 9 illustre les avantages du système selon l'invention muni de ses moyens de surélévation des points de fixation, dans le cas d'un support flottant de type tri-flotteurs. La figure 9 montre l'impact, pour une même tension, de la hauteur (H) du point de fixation (hauteur mesurée au dessus de la ligne de flottaison) sur la gîte (PS) pour trois masses linéiques différentes (100 kg/m en points, 450 kg/m en pointillé, et 900 kg/m en trait plein).

On observe (figure 9) que quelle que soit la caractéristique de l'ancrage (masse linéique), on réduit presque par deux, sur ce cas, la gîte en montant les ancrages de 30 mètres à iso prétension.a

Revendications

**1.** Système éolien comprenant une éolienne reposant sur un support flottant, et des moyens d'ancrage du système connecté audit système par des points de fixation, **caractérisé en ce que** ledit système comporte des moyens de surélévation desdits points de fixation au dessus d'une ligne de flottaison dudit support flottant, lesdits moyens de surélévation surélèvant lesdits points de fixation à une hauteur par rapport à la ligne de flottaison déterminée pour contrebalancer un moment de renversement de l'éolienne soumise à un vent de vitesse donné.

**2.** Système selon la revendication 1, **caractérisé en ce que** lesdits points de fixation sont au dessus du franc bord du support flottant.

**3.** Système selon l'une des revendications précédentes, dans lequel lesdits moyens de surélévation comportent des poutres, ou des poutres et des câbles.

**4.** Système selon la revendication 3, dans lequel les poutres sont des supports métalliques tubulaires, ou des supports métalliques de section variable, ou réalisées en treillis.

**5.** Système selon l'une des revendications précédentes, dans lequel les moyens de surélévation sont connectés mécaniquement au mat de l'éolienne.

**6.** Système selon l'une des revendications précédentes, dans lequel les moyens de surélévation sont connectés mécaniquement entre eux par des poutres ou des câbles, pour raidir à la flexion lesdits moyens de surélévation.

**7.** Système selon l'une des revendications précédentes, dans lequel les moyens de surélévation sont constitués d'une extension des colonnes du flotteur.

**8.** Système selon l'une des revendications précédentes, dans lequel des points de fixation sont situés à des hauteurs différentes.

**Patentansprüche**

**1.** Windkraftsystem, umfassend einen Windgenerator, der auf einem schwimmenden Träger ruht, und Mittel zum Verankern des Systems, die mit dem System durch Befestigungspunkte verbunden sind, **dadurch gekennzeichnet, dass** das System Mittel zum Anheben der Befestigungspunkte über eine Wasserlinie des schwimmenden Trägers aufweist, wobei die Mittel zum Anheben die Befestigungspunkte auf eine bestimmte Höhe gegenüber der Wasserlinie anheben, um ein Kippmoment des Windgenerators auszugleichen, der einem gegebenen Wind mit einer Geschwindigkeit ausgesetzt ist.

**2.** System nach Anspruch 1, **dadurch gekennzeichnet, dass** die Befestigungspunkte über dem Freibord des schwimmenden Trägers sind.

3.  System nach einem der vorhergehenden Ansprüche, wobei die Mittel zum Anheben Balken oder Balken und Kabel aufweisen.

4.  System nach Anspruch 3, wobei die Balken röhrenförmige, metallische Träger oder metallische Träger mit variablem Querschnitt sind oder aus Gitterwerk erstellt sind.

5.  System nach einem der vorhergehenden Ansprüche, wobei die Mittel zum Anheben mechanisch mit dem Mast des Windgenerators verbunden sind.

6.  System nach einem der vorhergehenden Ansprüche, wobei die Mittel zum Anheben mechanisch untereinander durch Balken oder Kabel verbunden sind, um die Mittel zum Anheben gegen das Verbiegen zu versteifen.

7.  System nach einem der vorhergehenden Ansprüche, wobei die Mittel zum Anheben aus einer Verlängerung der Säulen des Schwimmers gebildet sind.

8.  System nach einem der vorhergehenden Ansprüche, wobei die Befestigungspunkte an verschiedenen Höhen angeordnet sind.

**Claims**

1.  A wind power system comprising a wind turbine resting on a floating support and means for anchoring the system, connected to said system by attachment points, **characterized in that** said system comprises means for raising said attachment points above a waterline of said floating support, said raising means raising said attachment points to a height with respect to the waterline determined so as to counterbalance an overturning moment of the wind turbine subjected to a given wind speed.

2.  A system as claimed in claim 1, **characterized in that** said attachment points are located above the freeboard of the floating support.

3.  A system as claimed in any one of the previous claims, wherein said raising means comprise beams, or beams and cables.

4.  A system as claimed in claim 3, wherein the beams are tubular metal supports, or metal supports of variable section, or truss beams.

5.  A system as claimed in any one of the previous claims, wherein the raising means are mechanically connected to the tower of the wind turbine.

6.  A system as claimed in any one of the previous claims, wherein the raising means are mechanically connected to one another by beams or cables, so as to provide flexural stiffening of said raising means.

7.  A system as claimed in any one of the previous claims, wherein the raising means consist of an extension of the columns of the floater.

8.  A system as claimed in any one of the previous claims, wherein attachment points are located at different heights.

Fig. 1

Fig. 2

PO

Fig. 3

CO

Fig. 4

LP

Fig. 5

Fig. 6

Fig. 7

Fig. 8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102008029982